# EUROPEAN PATENT APPLICATION

(11) **EP 1 826 372 A1**
(43) Date of publication of application: **29.08.2007**
(21) Application number: 05785174.3
(22) Date of filing: 26.09.2005
(51) Int. Cl.: F01N 3/20, B01D 53/94, F01N 3/24, F01N 3/36, F02D 41/38, F02M 45/02

(54) **EXHAUST GAS PURIFYING DEVICE**

(30) Priority: 04.10.2004 JP 2004290854
(71) Applicant: Hino Motors, Ltd., Hino-shi, Tokyo 191-8660 (JP)
(72) Inventor: YOKOTA, Haruyuki, Hino Motors, Ltd., Hino-shi, Tokyo 191-8660 (JP)
(74) Representative: Albrecht, Thomas
(86) International application number: PCT/JP2005/017580
(87) International publication number: WO 2006/038480

(57) **Abstract**

A NOx occluding reduction catalyst that occludes NOx is efficiently regenerated by carrying our post-injection of a necessary and sufficient quantity of fuel without diluting engine oil on the inner wall surface of a cylinder. A NOx absorbing agent and an active metal are carried on the NOx occluding reduction catalyst (16) provided in an exhaust gas passage (14) of an engine (11), and the fuel is supplied to the NOx occluding reduction catalyst (16) by adding the fuel to the exhaust gas in the exhaust gas passage (14) with a fuel adding means (17). The fuel adding means (17) is an accumulator fuel injector that carries out post-injection, following main injection into a cylinder (22) of the engine (11), at timing such that the fuel does not ignite in the cylinder (22). The post-injection with the accumulator fuel injector (17)is carried out in divided 3 to 20 times at the later period of the expansion stroke of the engine (11) .

## Description

### TECHNICAL FIELD

The present invention relates to a device that purifies exhaust gas by occluding NOx contained in the exhaust gas of an engine with a NOx occluding reduction catalyst, and also regenerates the catalyst.

### BACKGROUND ART

Conventionally, there has been disclosed an exhaust gas purifying device for engine in which a filter for collecting particulate is provided in an exhaust passage and the filter is regenerated at the time of filter regeneration (for example, refer to Patent Document 1). In this exhaust gas purifying device for engine, a regenerating means is provided which carries out per one cycle of engine two times of post-injections and oxygen concentration control of exhaust gas so as to obtain a certain target regeneration speed during the filter regeneration. The post-injection is carried out by using a common rail type fuel injecting device. The regeneration period using the regenerating means for filter is made up of an early period, a middle period, and a later period. In the case where the filter carries an oxidation catalyst, the early period consists of an early stage at which temperature elevating control for controlling the temperature to the catalyst activating temperature is carried out and a later stage at which temperature elevating control for controlling the bed temperature of filter to a first target bed temperature, which is a temperature at which the particulate ignites by itself, is carried out. At the early stage of the early period, one time of post-injection for increasing the exhaust gas temperature is carried out per one cycle of engine, and at the later stage of the early period, two times of post-injections for increasing the exhaust gas temperature and for supplying HC are carried out per one cycle of engine. Further, in the middle period, one time of post-injection for increasing the exhaust gas temperature is carried out per one cycle of engine, and in the later period, two times of post-injections for increasing the exhaust gas temperature and for supplying HC are carried out per one cycle of engine. Out of two times of post-injections, the first post-injection timing is set in the range from the top dead center position of a piston close to main injection to 60 degrees after the top dead center, and the configuration is made so that the fuel injected by this post-injection burns in a cylinder to directly increase the exhaust gas temperature. Out of the two times of post-injections, the second post-injection timing is set 60 degrees or later after the top dead center of the piston, and the configuration is made so that the fuel injected by this post-injection scarcely burns in the cylinder, and is supplied as HC to the oxidation catalyst carried by the filter.

In the exhaust gas purifying device for engine configured as described above, first, at the early period of the filter regenerating period, the bed temperature of filter is rapidly increased to the first target bed temperature. Next, at the middle period of the filter regenerating period, in the state in which the bed temperature of filter is maintained at the first target bed temperature, first oxygen concentration control is carried out in such a manner that the bed temperature of filter does not exceed the allowable highest temperature. Thereby, a decrease in the durability of filter can be prevented. Further, at the later period of the filter regenerating period, in the state in which the bed temperature of filter is maintained at the second target bed temperature higher than the first target bed temperature, sufficient oxygen is supplied to the filter by increasing the target oxygen concentration as compared with the concentration at the time of first oxygen concentration control. Thereby, the particulate remaining in the filter at the time close to the finish of regeneration can be burnt off rapidly and surely. As a result, the filter regeneration period can be shortened, and the filter can be regenerated almost completely.
Patent Document 1: Japanese Unexamined Patent Application Publication No. 2004-183525 (claims 1 to 7, paragraphs [0014] to [0019], paragraph [0023], paragraph [0032])

### DISCLOSURE OF THE INVENTION

### PROBLEMS TO BE SOLVED BY THE INVENTION

In the conventional exhaust gas purifying device of engine described in Patent Document 1, the fuel injected by the second post-injection as it remains unburned is supplied to the oxidation catalyst carried by the filter. However, if this unburned fuel is injected by one time of post-injection per one cycle of engine, relatively large quantity of fuel must be injected at one time. Therefore, the injection speed is high, and the injected fuel reaches the inner wall surface of the cylinder. For this reason, the engine oil forming a lubrication film on the inner wall surface of the cylinder is diluted by the injected fuel, so that there occurs a trouble such that the lubrication of engine is hindered, and a sufficient quantity of fuel cannot be supplied to the filter by post-injection.
An object of the present invention is to provide an exhaust gas purifying device capable of efficiently regenerating a NOx occluding reduction catalyst that occludes NOx by post-injecting a necessary and sufficient quantity of fuel without diluting engine oil on the inner wall surface of a cylinder.

### MEANS FOR SOLVING THE PROBLEMS

An invention of claim 1 provides an improvement of an exhaust gas purifying device including a NOx occluding reduction catalyst 16 that is provided in an exhaust gas passage 14 of an engine 11 and carries a NOx absorbing agent and an active metal; and a fuel adding means 17 that adds a fuel 15 to the exhaust gas in the exhaust gas passage 14 and thereby supplies the fuel 15 to the NOx occluding reduction catalyst 16.
The characteristic configuration is that the fuel adding means 17 is an accumulator fuel injector that carries out post-injection, following main injection into a cylinder 22 of the engine 11, at timing such that the fuel 15 does not ignite in the cylinder 22, and the post-injection is carried out at the later period of the expansion stroke of the engine 11 in divided 3 to 20 times.
In the exhaust gas purifying device described in claim 1, when the exhaust gas passes through the NOx occluding reduction catalyst 16, the NOx absorbing agent in the catalyst 16 occludes NOx in the exhaust gas as nitrate, and hydrocarbon in the exhaust gas is oxidized by the oxidation action of the active metal carried on the catalyst 16. When the NOx occlusion quantity of the catalyst 16 approaches the saturated state, the accumulator fuel injector 17 carries out post-injection in divided 3 to 20 times at timing such that the fuel 15 does not ignite in the engine 11. This configuration prevents engine oil on the inner wall surface of the cylinder 22 from being diluted by the fuel, thereby increasing the concentration of hydrocarbon in the exhaust gas at the inlet of the catalyst 16. Therefore, hydrocarbon reacts with oxygen in the exhaust gas at the inlet of the catalyst 16, by which oxygen is consumed. As a result, the air excess ratio of the exhaust gas on the exhaust gas downstream side of the inlet of the catalyst 16 decreases, and HC, CO or H₂ increase as a reducing agent. Therefore, NOx occluded by the catalyst 16 reacts with the HC etc. to yield N₂, CO₂ and H₂O which are released from the catalyst 16. Since the HC in the exhaust gas has the optimal concentration, most of the HC can be caused to function as a reducing agent in the catalyst 16.

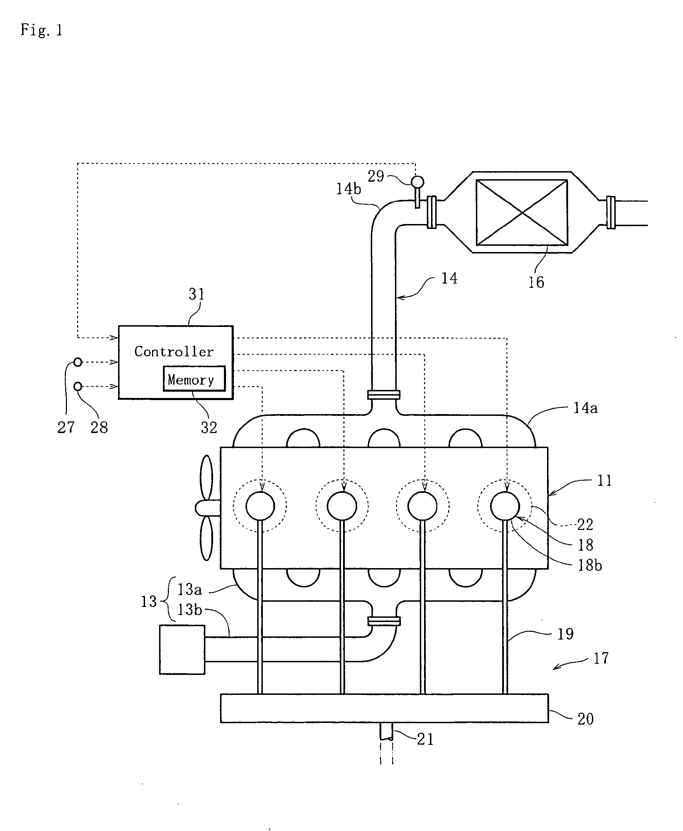

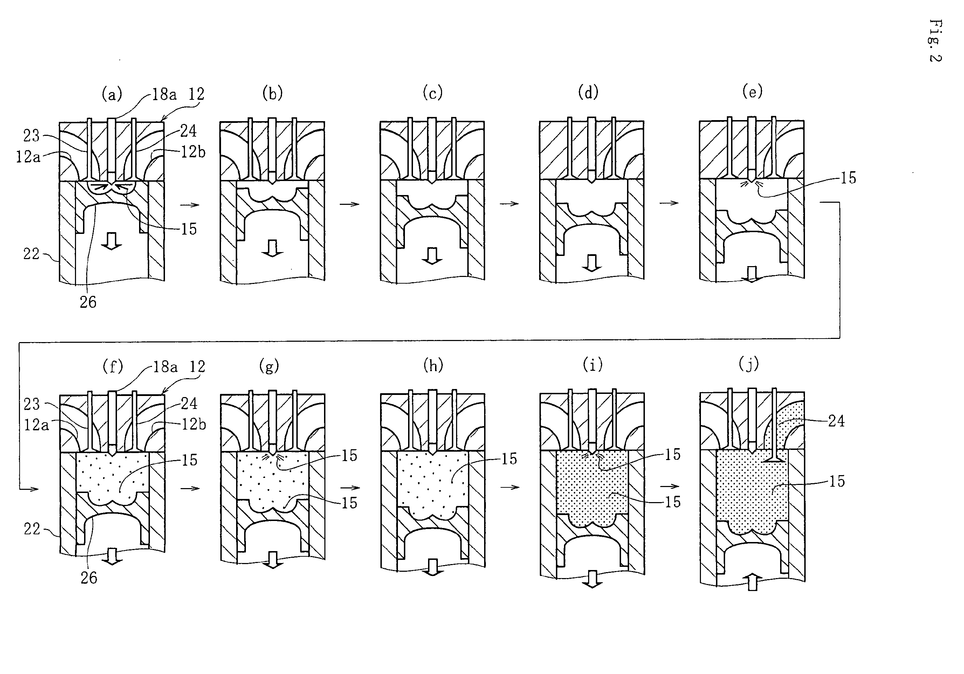

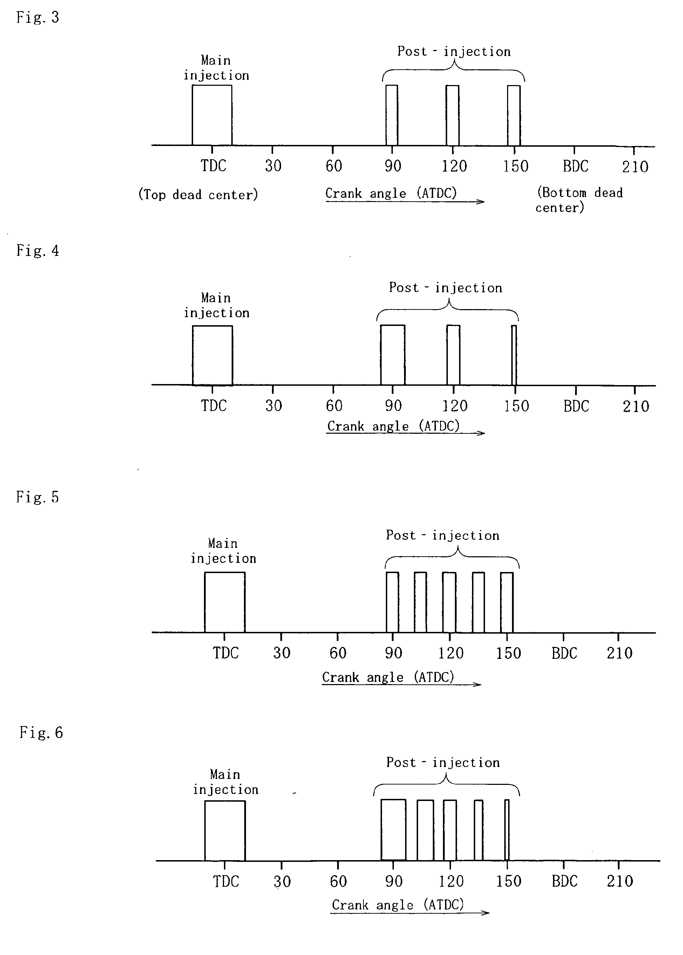

An invention of to claim 2 is based on claim 1 and further
characterized in that, as shown in Figs. 2 and 3, when the top dead center position of a piston 26, which is the start time of the expansion stroke of the engine 11, is a crank angle of 0 degree, among the post-injections carried in divided 3 to 20 times at the later period of the expansion stroke, the first post-injection is started in the range of 90 to 120 degrees of the crank angle.
In the exhaust gas purifying device described in claim 2, the fuel 15 injected by the post-injection does not ignite in the engine 11, and can be supplied surely to the catalyst as it remains an unburned fuel 15.
An invention of claim 3 is based on claim 1 and further characterized in that, as shown in Fig. 1, the NOx occlusion quantity of the NOx occluding reduction catalyst 16 is calculated from a prediction map based on an engine load and an engine rotational speed.
In the exhaust gas purifying device described in claim 3, the NOx occlusion quantity of the catalyst 16 can be predicted relatively exactly without the use of a sensor for detecting the concentration of NOx.
It is preferable that the injection quantities of post-injections carried out in divided 3 to 20 times are equal to each other or decrease gradually after the first post-injection.

### EFFECTS OF THE INVENTION

As described above, according to the present invention, the fuel adding means is an accumulator fuel injector that carries out post-injection, following the main injection into the engine, at timing such that the fuel does not ignite in the engine, and the configuration is made such that the post-injection is carried out in divided 3 to 20 times at the later period of the expansion stroke of the engine. Therefore, NOx in the exhaust gas is occluded as nitrate by the NOx occluding reduction catalyst, and hydrocarbon in the exhaust gas is oxidized. When the NOx occlusion quantity of the catalyst approaches the saturated state, the accumulator fuel injector carries out post-injection in divided 3 to 20 times at timing such that the fuel does not ignite in the engine. This configuration prevents engine oil on the inner wall surface of the cylinder from being diluted by the fuel, thereby increasing the concentration of HC in the exhaust gas at the outlet of catalyst. As a result, at the inlet of the catalyst, HC reacts with oxygen in the exhaust gas, by which oxygen is consumed, and HC etc. increase as a reducing agent in the state in which oxygen is scarcely present. Therefore, NOx occluded by the catalyst reacts with the HC etc. to yield N₂ etc., which are released from the catalyst, so that the catalyst can be regenerated efficiently. Since HC in the exhaust gas has the optimal concentration, most of HC can be caused to function as a reducing agent in the NOx occluding reduction catalyst.
If among the post-injections carried out in divided 3 to 20 times at the later period of the expansion stroke of engine, the first post-injection is started in the range of 90 to 120 degrees of the crank angle, the fuel injected by the post-injection does not ignite in the engine, and can be supplied surely to the catalyst as it remains an unburned fuel.
Further, if the NOx occlusion quantity of the NOx occluding reduction catalyst is calculated from the prediction map based on the engine load and the engine rotational speed, the NOx occlusion quantity of the catalyst can be predicted relatively exactly without the use of the sensor for detecting the concentration of NOx.

### BRIEF DESCRIPTION OF THE DRAWINGS

Fig. 1 is a configuration view showing an exhaust gas purifying device including an engine in accordance with a first embodiment of the present invention;
Fig. 2 is a sectional view of an essential portion, showing an expansion stroke of an engine;
Fig. 3 is a graph showing the timing and quantity of main injection and post-injection;
Fig. 4 is a sectional view corresponding to Figure 3, showing a second embodiment of the present invention;
Fig. 5 is a sectional view corresponding to Figure 3, showing a third embodiment of the present invention; and
Fig. 6 is a sectional view corresponding to Fig. 3, showing a fourth embodiment of the present invention.

### EXPLANATION OF REFERENCE NUMERALS

- 11: diesel engine
- 14: exhaust gas passage
- 15: fuel
- 16: NOx occluding reduction catalyst
- 17: accumulator fuel injector (fuel adding means)
- 22: cylinder
- 26: piston

### BEST MODE FOR CARRYING OUT THE INVENTION

The best mode for carrying out the present invention will now be described with reference to the accompanying drawings.

### First Embodiment

As shown in Figs. 1 and 2, an intake port 12a of a diesel engine 11 is communicatingly connected with an intake pipe 13b through an intake manifold 13a, and an exhaust port 12b is communicatingly connected with an exhaust pipe 14b through an exhaust manifold 14a. In an intermediate portion of the exhaust pipe 14b, a NOx occluding reduction catalyst 16 is provided. The NOx occluding reduction catalyst 16 is a platinum-barium-alumina catalyst that occludes NOx in exhaust gas flowing into the exhaust pipe 14b and is regenerated by the release of the occluded NOx when the concentration of hydrocarbon (HC) in the exhaust gas increases. Although not illustrated, this catalyst 16 has a cordierite-made monolithic carrier in which a lattice-shaped or honeycomb-shaped passage is formed in the direction of the exhaust gas flowing and a coat layer that is formed on the monolithic carrier and carries a NOx occluding agent and a noble metal (active metal). The active metal is exemplified by platinum (Pt), palladium (Pd), rhodium (Rh), and the like. In the exhaust pipe 14b on the exhaust gas downstream side of the NOx occluding reduction catalyst 16, although not illustrated, there is provided a particulate filter with an oxidation catalyst, namely, a particulate filter that carries an active metal functioning as an oxidation catalyst. The active metal is exemplified by platinum (Pt), palladium (Pd), rhodium (Rh), and the like can be cited.

On the other hand, on the engine 11, a fuel adding means 17 is provided to add a fuel 15 to the exhaust gas in the exhaust pipe 14b and thereby supply the fuel 15 to the catalyst 16 (Figs. 1 and 2). The fuel adding means 17 is an accumulator fuel injector that regulates the injection timing and injection quantity of the fuel 15 injected into the engine 11. This accumulator fuel injector 17 has electronically controlled injectors 18 each mounted on a cylinder head 12, a common rail 20 connected to these injectors 18 via fuel transfer pipes 19, and a fuel supply pump (not shown) connected to the common rail 20 via a fuel supply pipe 21 (Figs.1 and 2). The injector 18 consists of an injection nozzle 18a inserted into the cylinder head 12 so as to face to a cylinder 22, a needle valve (not illustrated) that can open and close the injection hole of the injection nozzle 18a, and an electromagnetic valve 18b for injector, which vertically moves the needle valve provided at the proximal end of the injection nozzle 18a via a compound piston and a unidirectional orifice plate. The configuration is made such that when the electromagnetic valve 18b for injector is in an off state, the injection hole of the injection nozzle 18a is closed, and when the electromagnetic valve 18b for injector is turned on, the injection hole is opened and hence the fuel 15 is injected into the cylinder 22. The intake port 12a and the exhaust port 12b are formed on the cylinder head 12 so as to face to the cylinder 22. The intake port 12a is openably closed by an intake valve 23, and the exhaust port 12b is openably closed by an exhaust valve 24 (Fig. 2). Further, in the cylinder 22, a piston 26 is housed so as to be movable up and down.

The load of the engine 11 is detected by a load sensor 27, and the rotational speed of the engine 11 is detected by a rotation sensor 28 (Fig. 1). In the exhaust pipe 14b on the exhaust gas upstream side of the catalyst 16, there is provided a temperature sensor 29 that detects the temperature of exhaust gas flowing in the exhaust pipe 14b. The detection outputs of the load sensor 27, the rotation sensor 28, and the temperature sensor 29 are connected to the control input of a controller 31, and the control output of the controller 31 is connected to the electromagnetic valves 18b for injector. The controller 31 is provided with a memory 32. This memory 32 stores a map for predicting the NOx occlusion quantity of the catalyst 16 based on the engine load detected by the load sensor 27 and the engine rotational speed detected by the rotation sensor 28.

The operation of the exhaust gas purifying device configured as described above is explained.
The engine 11 is started, and the temperature sensor 29 detects the exhaust gas temperature lower than 220°C. The controller 31 calculates the NOx occlusion quantity of the catalyst 16 from the NOx occlusion quantity prediction map stored in the memory 32 based on the engine load detected by the load sensor 27 and the engine rotational speed detected by the rotation sensor 28. If it is judged that this occlusion quantity is smaller than a predetermined quantity, the controller 31 does not carry out the post-injection of the fuel 15, and controls the electromagnetic valves 18b for injector so that the ordinary operation state is established. Therefore, the exhaust gas exhausted from the engine 11 passes through the exhaust pipe 14b and the catalyst 16. At this time, NOx contained in the exhaust gas is occluded by the catalyst 16. If, for example, barium (Ba) is used as a NOx absorbing agent carried on the coat layer of the catalyst 16, the NOx discharged from the engine 11 reacts with O₂ in the exhaust gas to yield NO₂ in the catalyst 16. Further, the NO₂ reacts with BaO and BaCO₃ in the catalyst 16 to yield [Ba(NO₃)₂], and is occluded by the catalyst 16 in this state. HC contained in the exhaust gas is oxidized by the oxidation action of the noble metal (active metal) carried on the coat layer of the catalyst 16.

In the state in which the temperature sensor 29 detects the exhaust gas temperature not lower than 220°C, if the controller 31 judges that the NOx occlusion quantity of the catalyst 16 approaches the saturated state, the controller 31 controls the electromagnetic valves 18b for injector to carry out main-injection of the fuel 15 into the engine 11, and, following the main injection, carries out post-injection at timing such that the fuel 15 does not ignite in the cylinder 22 in divided 3 to 20 times, preferably 5 to 10 times. When the top dead center position of the piston 26, which is the start time of the expansion stroke of the engine 11, is a crank angle of 0 degree, among the post-injections carried out dividedly at the later period of expansion stroke, the first post-injection is started in the range of 90 to 120 degrees, preferably 100 to 110 degrees, of crank angle. In this embodiment, as shown in Figs. 2 and 3, the post-injection is carried out in divided three times, and the first post-injection is carried out at a crank angle of about 90 degrees. The second and third post-injections are carried out at equal intervals within the expansion stroke. In this embodiment, the post-injections are carried out every about 30 degrees of crank angle. Further, the injection quantities of post-injections from the first post-injection to the third post-injection are equal to each other. When the injection quantity of main injection is 100%, the total injection quantity of the first to third post-injections is preferably 20 to 100%. The reason why the post-injection is carried out in divided 3 to 20 times is that if the number of post-injections is smaller than 2, the injection speed of fuel increases as the injection quantity becomes larger and the fuel reaches the inner wall surface of cylinder, causing a risk that the engine oil on the inner wall surface of cylinder may be diluted by the fuel, and if the number of post-injections exceeds 20, the response of the needle valve of injector decreases. The reason why the first post-injection is started in the range of 90 to 120 degrees of crank angle is that the post-injected fuel is prevented from igniting in the cylinder. Further, the reason why the total injection quantity of post-injections is limited to the range of 20 to 100% at the time when the injection quantity of main injection is 100% is that if the total injection quantity is smaller than 20%, the catalyst 16 does not have a sufficient reduction atmosphere, and if the total injection quantity exceeds 100%, the engine oil is diluted, or the temperature of the catalyst 16 rises excessively.

By carrying out post-injection of the fuel 15 at timing such that the fuel 15 does not ignite in the cylinder 22 as described above, the oxygen concentration on the catalyst 16 decreases relatively. That is to say, the air excess ratio of exhaust gas at the inlet of the catalyst 16 decreases, and HC, CO or H₂ increase as a reducing agent. As a result, NOx occluded by the catalyst 16 is released from the catalyst 16 as described below. First, [Ba(NO₃)₂] occluded by the catalyst 16 reacts with the reducing agent in the exhaust gas and is reduced to NO₂ or N₂. Next, the catalyst 16 functions as a reduction catalyst having high selectivity, and thus the NO₂ reacts with CO and HC in the exhaust gas to yield and discharge harmless N₂, CO₂ and H₂O into the atmosphere. As a result, since the catalyst 16 is regenerated, NOx in the exhaust gas can again be occluded by the catalyst 16, and thus NOx contained in the exhaust gas at the outlet of the catalyst 16 can be reduced.

Since HC yielded by the post-injection of the fuel 15 has the optimal concentration, most of HC functions as a reducing agent in the catalyst 16 as described above. However, some of HC does not function as a reducing agent, and passes through the catalyst 16 as it remains unchanged. Therefore the concentration of HC at the outlet of the catalyst 16 increases. But this unburned HC is collected by a particulate filter with a catalyst (not illustrated). The unburned HC collected by this filter is oxidized and burnt by the oxidation action of the noble metal (active metal such as Pt, Pd or Rh) carried on this filter when the exhaust gas that does not contain unburned fuel and is in a lean state in which the air excess ratio is high flows into the filter. Therefore, the concentration of HC at the outlet of the filter is kept low, so that the discharge of HC into the atmosphere can be prevented, and the particulate containing soot collected on the filter can be burnt by the heat of reaction. Therefore, the discharge of particulate into the atmosphere can be prevented.
In this embodiment, a natural supply type diesel engine is presented as the engine. However, the exhaust gas purifying device of the present invention may be used for a diesel engine with a turbocharger.

### Second Embodiment

Fig. 4 shows a second embodiment of the present invention.
In this embodiment, the post-injection is carried out so that the injection quantity is decreased gradually from the first to the third post-injection. In other words, among the three times of post-injections, the injection quantity of the first post-injection is largest, the injection quantity of the second post-injection is made smaller than that of the first post-injection, and the injection quantity of the third post-injection is further decreased. The total injection quantity of post-injection is equal to that of the post-injection of the first embodiment. The other configurations are the same as those of the first embodiment.
In the exhaust gas purifying device configured as described above, even if the injection quantity of the first post-injection is large, the injected fuel evaporates before reaching the inner wall surface of cylinder because the temperature in the cylinder is extremely high, and the quantity of post-injection decreases as the temperature in the cylinder decreases. As a result, the adhesion of fuel onto the inner wall surface of cylinder due to post-injection can be prevented more surely than in the case of the first embodiment. The other operations are almost the same as those of the first embodiment, so that the repeated explanation is omitted.

### Third Embodiment

Fig. 5 shows a third embodiment of the present invention.
In this embodiment, the post-injection is carried out in divided five times, and the first post-injection is carried out at a crank angle of about 90 degrees. The second to fifth post-injections are carried out at equal intervals in the expansion stroke. In this embodiment, the post-injections are carried out every about 15 degrees of crank angle. Further, the total injection quantity of the first to fifth post-injections is equal to the total injection quantity of the first to third post-injections in the first embodiment. The other configurations are the same as those of the first embodiment.
In the exhaust gas purifying device configured as described above, the injection quantity of each post-injection is smaller than the injection quantity of each post-injection in the first embodiment, so that the adhesion of fuel onto the inner wall surface of cylinder due to post-injection can be prevented more surely than in the case of the first embodiment. The other operations are almost the same as those of the first embodiment, and thus the repeated explanation is omitted.

### Fourth Embodiment

Fig. 6 shows a fourth embodiment of the present invention.
In this embodiment, the post-injection is carried out in such a manner that the injection quantity is decreased gradually from the first time to the fifth time. In other words, among the five times of post-injections, the injection quantity of the first post-injection is largest, and the injection quantity of the second and subsequent post-injections is decreased gradually. The total injection quantity of post-injection is equal to that of the post-injection of the third embodiment. The other configurations are the same as those of the third embodiment.
In the exhaust gas purifying device configured as described above, even if the injection quantity of the first post-injection is large, the injected fuel evaporates before reaching the inner wall surface of cylinder because the temperature in the cylinder is extremely high, and the quantity of post-injection decreases as the temperature in the cylinder decreases. As a result, the adhesion of fuel onto the inner wall surface of cylinder due to post-injection can be prevented more surely than in the case of the third embodiment. The other operations are almost the same as those of the third embodiment, and thus the repeated explanation is omitted.

### INDUSTRIAL APPLICABILITY

The NOx occluding reduction catalyst that occludes NOx can be regenerated efficiently by carrying out post-injection of a necessary and sufficient quantity of fuel without diluting engine oil on the inner wall surface of cylinder. Therefore, the present invention can be applied to not only an onboard engine but also an engine for industrial machinery or the like.

## Claims

1. An exhaust gas purifying device comprising a NOx occluding reduction catalyst (16) that is provided in an exhaust gas passage (14) of an engine (11) and carries a NOx absorbing agent and an active metal; and a fuel adding means (17) that adds a fuel (15) to the exhaust gas in the exhaust gas passage (14) and thereby supplies the fuel (15) to the NOx occluding reduction catalyst (16), wherein
the fuel adding means (17) is an accumulator fuel injector that carries out post-injection, following main injection into a cylinder (22) of the engine (11), at timing such that the fuel (15) does not ignite in the cylinder (22), and
the post-injection is carried out at the later period of the expansion stroke of the engine (11) in divided 3 to 20 times.

2. The exhaust gas purifying device according to claim 1, wherein when the top dead center position of a piston (26), which is the start time of the expansion stroke of the engine (11), is a crank angle of 0 degree, among the post-injections carried out in divided 3 to 20 times at the later period of the expansion stroke, the first post-injection is started in the range of 90 to 120 degrees of the crank angle.

3. The exhaust gas purifying device according to claim 1, wherein the NOx occlusion quantity of the NOx occluding reduction catalyst (16) is integrated from a prediction map based on an engine load and an engine rotational speed.

4. The exhaust gas purifying device according to claim 1, wherein the injection quantities of post-injections carried out in divided 3 to 20 times are equal to each other or decrease gradually after the first post-injection.
